# EUROPEAN PATENT APPLICATION

(11) **EP 3 696 331 A1**
(43) Date of publication of application: **19.08.2020**
(21) Application number: 19176974.4
(22) Date of filing: 28.05.2019
(51) Int. Cl.: E02F 9/08, E02F 9/20, E02F 9/22

(54) **CONSTRUCTION MACHINE WITH FLYWHEEL ARRANGEMENT**

(30) Priority: 15.02.2019 WO PCT/CN2019/075207
(71) Applicant: Guangxi LiuGong Machinery Co., Ltd., Liuzhou Guangxi 545007 (CN)
(72) Inventor: Cai, Wen, Liuzhou, Guangxi 545007 (CN); Xu, Yuanjun, Liuzhou, Guangxi 545007 (CN); Jing, Guanghui, Liuzhou, Guangxi (CN); Huang, Mianjian, Liuzhou, Guangxi 545007 (CN)
(74) Representative: Wachenhausen & Kollegen Patentanwälte GbR

(57) **Abstract**

Provided is a drive train (10) for an electric hydraulic construction machine (1). The drive train comprises a drive system with an electric motor (11) and a flywheel arrangement (12, 12', 12'') connected to the system. The drive system further comprises a first output element protruding from the electric motor, and a hydraulic pump (14) provided on a side of the electric motor from which the first output element.

## Description

### Technical Field

The present invention is directed to a drive train of an electric hydraulic construction machine and an electric hydraulic construction machine comprising the drive train.

### Technical background

Construction machines such as excavators are widely used in the market e.g. for earth moving and material handling. Such excavators typically comprise a boom, a bucket arm, a bucket and a cab on a rotating platform which is supported by an undercarriage having tracks or wheels. Known excavators use hydraulic power from a hydraulic pump for actuating the various elements of the excavator, in particular for moving the boom, the bucket arm and the bucket. During a working cycle of the excavator a load of the hydraulic pump varies greatly over long term, e.g. when the bucket of the excavator is filled or not filled, and over short term, e.g. due to shocks or other external forces acting on the excavator.

Currently due to more strengthened requirements concerning exhaust emission of vehicles also in the field of construction machines research and development work takes place with the aim of providing a construction machine with an electric drive train. Up to now the electric motor of for example an electric hydraulic excavator drives the hydraulic pump directly. The variation of the load of the hydraulic pump causes the motor rotational speed to undulate and generates a dynamic load. Thus, the motor rotational speed fluctuates greatly, which causes a hydraulic pump speed fluctuation, affects an output flow of the hydraulic pump and leads to a poor performance of an operation and control of the construction machine. Furthermore, because of a large angular acceleration of the dynamic load a durability of parts of a drive train connecting the electric motor and the hydraulic pump is reduced. Additionally, to overcome peak short-term loads of the hydraulic pump, in known constructions it is necessary to provide an electric motor with a relatively large net power leading to high cost and requiring much installation space.

### Summary of the invention

In the light of the above discussed drawbacks inherent to known electric hydraulic construction machines it is an object of the present invention to provide a drive train for a construction machine as well as a construction machine comprising the drive train with improved controllability of the whole machine, improved durability of the drive train and a small type of electric motor with reduced weight and dimensions.

The object is accomplished by a drive train for an electric hydraulic construction machine. The drive train comprises a drive system with an electric motor and a flywheel arrangement connected to the system. The drive system further comprises a first output element protruding from the electric motor, and a hydraulic pump provided on a side of the electric motor from which the first output element.

The electric motor in the sense of the invention is an electrical machine configured to convert electrical energy into mechanical energy. The electric motor can be powered by direct current (DC) sources, e.g. batteries, or by alternating current (AC) sources, e.g. a power grid, or by electrical generators. The electric generator may be mechanically identical to the electric motor but operating in the reverse direction, and thus accepting mechanical energy (such as from a fluid flowing back from the hydraulic pump) and converting this mechanical energy into electrical energy.

The electric motor may be brushed or brushless. The electric motor may be of various phase (a single phase, two phase, or three phase) and may be either air-cooled or liquid-cooled. Furthermore, the electric motor may be used in reverse as generator in order to recover energy for example during a breaking period of the construction machine. Therefore the electric motor may further be connected to a battery, preferably a lithium ion battery, configured to be charged by the electric motor and/or via an external power port and discharged to supply power to the construction machine, preferably to the electric motor.

The hydraulic pump according to the present invention is a mechanical source of power that is configured to convert mechanical power, i.e. torque supplied via the drive train to the hydraulic pump, into hydraulic energy (hydrostatic energy). When the hydraulic pump operates, it creates a vacuum at a pump inlet, which forces liquid, preferably oil, from a reservoir into an inlet line of the pump and by mechanical action delivers this liquid to a pump outlet and forces it into a hydraulic system. The hydraulic pump may be a gear pump, a rotary vane pump, a screw pump, a damped axis pump, an inline axial piston pump, a radial piston pump or a peristaltic pump.

The flywheel arrangement may comprise an electric motor side flywheel connected to the electric motor on a side of the electric motor which is opposite to the side of the electric motor where the hydraulic pump is provided. In other words, the electric motor side flywheel is connected to an output side of the electric motor. Thus, the electric motor side flywheel is an outermost part of the drive train. Therefore, it easy to mount, replace and maintain, when the construction machine is produced and/or during field operation thereof.

The flywheel arrangement may comprise an interposed flywheel provided between the electric motor and the hydraulic pump. Preferably, the first output element of the electric motor is connected torsion-proof to the interposed flywheel.

The flywheel arrangement may comprise a hydraulic pump side flywheel connected to the hydraulic pump on a side of the hydraulic pump which is opposite to a side of the hydraulic pump where electric motor is provided. In other words, the hydraulic pump side flywheel is connected to an output side of the hydraulic pump. Thus, the hydraulic pump side flywheel is an outermost part of the drive train. Therefore, it easy to mount, replace and maintain, when the construction machine is produced and/or during field operation thereof.

The drive train may further comprise a flexible coupler between the first flywheel and the hydraulic pump. The flexible coupler may be a clutch serving to couple or decouple the hydraulic pump from the drive train. The flexible coupler may also be an adapter, such that the electric motor and flywheel can be provided in existing construction machines in form of a retrofitting solution.

The flexible coupler may be connected to the hydraulic pump via spline. Spline means a connection via ridges and/or teeth on a drive shaft that mesh with grooves in a mating piece and transfer torque to it, maintaining the angular correspondence between them. Different splines are possible, like parallel key spline, involute spline, crowned spline, serration, helical spline, or ball spline. In parallel key spline sides of equally spaced grooves are parallel in both directions, radial and axial. In involute spline sides of the equally spaced grooves are involute, as with an involute gear. Curves increase strength by decreasing stress concentrations. In crowned spline sides of equally spaced grooves are involute, but male teeth are modified to allow for misalignment. In serrations sides of equally spaced grooves form a V-shape. In helical spline equally spaced grooves form a helix about the shaft. The sides may be parallel or involute. This can either minimize stress concentrations for a stationary joint under high load, or allow for rotary and linear motion between parts. In ball splines teeth of an outer part are implemented with a ball bearing to allow for free linear motion even under high torque.

The flexible couple may also be a torsion-elastic coupling. The torsion-elastic coupling may be a flexible jaw coupling, a flexible claw coupling, or a flexible pin type coupling. The flexible jaw coupling is a positive, torsionally flexible coupling which also permits radial, axial and angular displacements between the driving and driven parts. The flexible jaw coupling is failsafe. The flexible jaw coupling comprises two coupling halves with concave claws which are located opposite each other and are offset circumferentially, preferably by half a pitch division. An involute elastomeric with crowned tooth profile is provided in a space between these claws. The involute elastomeric serves as an internal damping member which protects a drive motor, here the electric motor, from dynamic overload. A progressively rising tooth characteristic may further reduce vibration energy and limit a vibration amplitude. In contrast to other flexible couplings, the elastomeric teeth of the involute elastomeric are not subjected to bending stresses, but only to pressure, thus resulting in lower wear and a higher load capacity for the teeth. The flexible claw coupling is a positive-locking, torsional flexible coupling which allows radial, axial and angular displacement between a driving and a driven shaft. It is a fail-safe coupling. Torque is transmitted by a flexible buffer set fitted in a buffer part and distributed substantially symmetrical around a circumference of the flexible claw coupling. Claws of a claw ring or claw part are operating in a space between the buffers. The buffers are subjected to compression. Therefore, a low wear and high loading capacity can be provided. A damping characteristic of the flexible claw coupling protects a drive motor, here the electric motor, from dynamic overloading. The flexible pin type coupling is a positive-locking, torsional elastic, flexible shaft coupling with rubbery-elastic transmission elements. The flexible pin type coupling is failsafe and pluggable.

The above-described flywheel arrangement may be configured to compensate for fluctuations in rotational speed of the drive train based on inertia of the flywheel arrangement in response to fluctuations in hydraulic pump load of the hydraulic pump. Fluctuations are random short-term changes of a system from its target state, i.e. discrepancies between the target and an actual state of the system.The flywheel is a mechanical device preferably with a circular cross section. The flywheel stores rotational energy. Thus, the flywheel resist changes and rotational speed by its moment of inertia. An amount of energy stored in the flywheel is approximately proportional to a square of its rotational speed. In other words, the flywheel as for example added between the electric motor and the hydraulic pump stores and releases energy to compensate for fluctuations of the load of the hydraulic pump. Therefore, the flywheel arrangement comprising at least one of the electric motor side flywheel, the interposed flywheel, and the hydraulic pump side flywheel can stabilize a rotating speed of the electric motor, reduce fluctuation of an angular velocity thereof and instantaneous angular acceleration of the electric motor, which can reduce a rate of change of an output flow of a hydraulic pump and improve a control performance of the whole construction machine. Furthermore, reducing the dynamic load caused by non-uniform rotation protects the electric motor as well as couplings and other parts used in the drive train and improves the durability of these parts. In addition, overcoming short-time overloading term by providing the flywheel leads to an electric motor with a smaller size in comparison to a direct connection of the electric motor to the hydraulic pump. Furthermore, it is not necessary to provide a complex control system measuring fluctuations in hydraulic pump load and adapting a rotational speed of the electric motor in substantially real time. Thus not only development costs but also weight and dimensions of the electric motor can be reduced.

Furthermore, according to the invention, an electric hydraulic construction machine is provided comprising the above-described drive train, a hydraulic system connected to the hydraulic pump, and a controller connected to the electric motor. The controller is configured to control an operation of the electric motor based on hydraulic load required by the hydraulic system. The construction machine may be a forklift, a wheel loader, an excavator (crawler excavator or wheel excavator), a bulldozer, a backhoe loader, a crane, a skid steer loader or a mining truck. The hydraulic system may comprise hydraulic cylinders for moving a bucket mounted to the construction machine and/or other hydraulic actuators for example for rotating a platform of the construction machine relatively to an undercarriage thereof. The controller may be a SPS-controller for example. The controller may comprise an interface connected with an operator's input interface for an operator of the construction to input control data. The controller may further be configured to determine a pressure required in the hydraulic system based on the control data input via the operator's input interface and received by the input interface of the controller. The connection between the operator's input interface and the input interface of the controller may be wired and/or wireless. The hydraulic load required by the hydraulic system corresponds to the hydraulic pump load of the hydraulic pump and depends on load condition of a load to be carried/moved by the construction machine.

### Brief description of the Figures

Figure 1 shows an electric hydraulic excavator comprising a drive train according of the present invention.
Figure 2 is a perspective view of the drive train according to a first embodiment.
Figure 3 is a top view of the drive train shown in figure 2.
Figure 4 is a view schematically showing the drive train according to a second embodiment.
Figure 5 is a view schematically showing the drive train according to a third embodiment.

### Detailed description of an embodiment

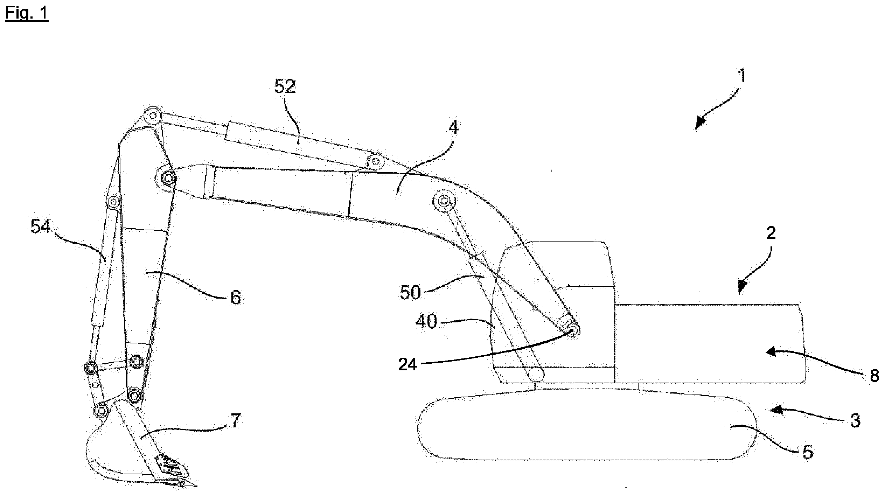

Fig. 1 is a side view of an electric hydraulic excavator 1 according to an embodiment of the present disclosure. The excavator 1 comprises a platform 2, also called top frame, which is rotatably coupled to an undercarriage 3 having tracks 5. On the platform 2, a boom 4 is hingedly mounted at a hinge portion 24 of the platform 2, i.e. at a first end of the boom 4, and an operator's cab 40 is provided. A dipper 6, also called stick or bucket arm, is hingedly coupled to the boom 4. A bucket 7 is hingedly coupled to the dipper 6. The boom 4 is movable by means of a first hydraulic cylinder 50 supported on the platform 2 and coupled to the boom 4, the dipper 6 is movable by means of a second hydraulic cylinder 52 supported on the boom 4 and connected to the dipper 6, and the bucket 7 is movable by means of a third hydraulic cylinder 54 supported on the dipper 6 and coupled to the bucket 7. It is to be noted, that although only one first cylinder 50 is shown in Fig. 1, it is possible to use two hydraulic cylinders 50, one on each side of the boom 4. In the configuration as shown, the hydraulic cylinder 50 exerts a pushing force on the boom 4 for moving the same.

Inside the platform 2, in an engine compartment 8 a drive train 10 (not shown in figure 1) is provided for generating power used for moving the excavator 1 and for actuating the hydraulic cylinders 50, 52, 54.

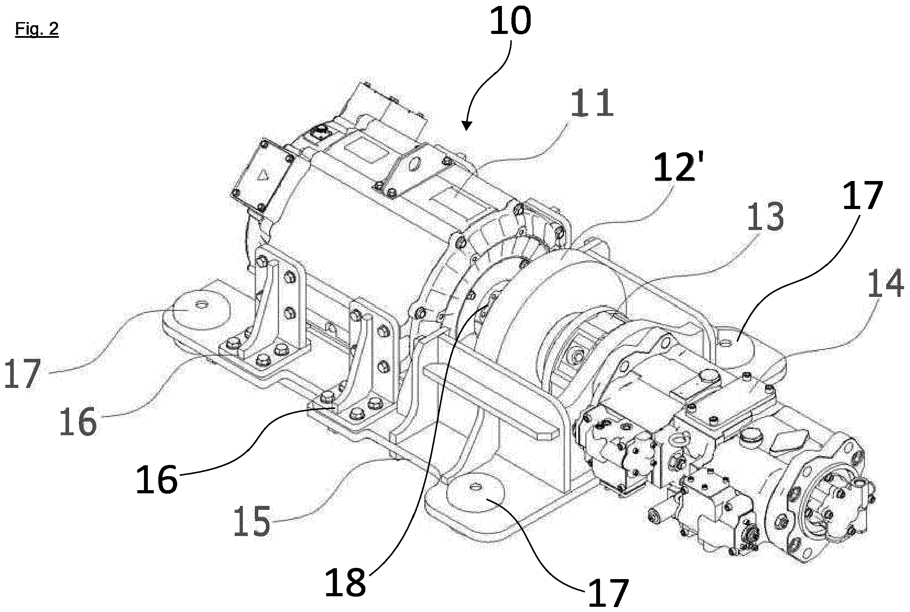

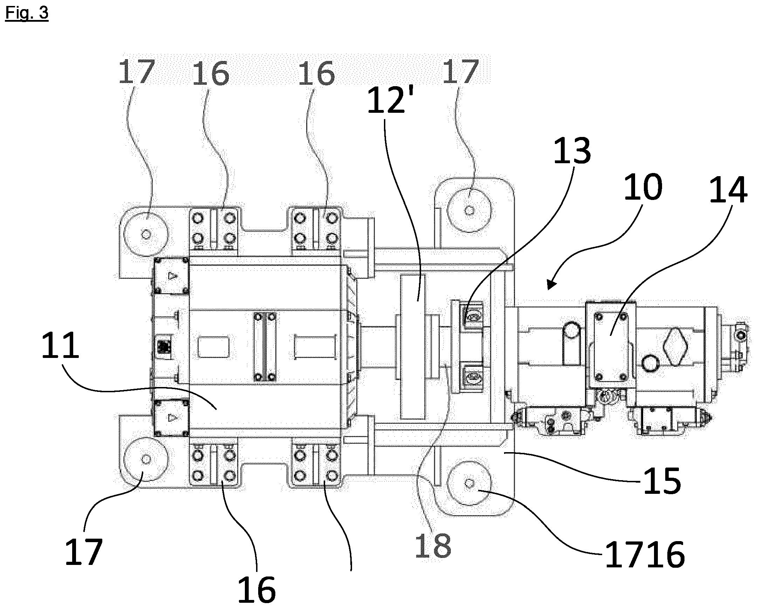

The drive train 10 will now be described in detail with reference to Figures 2 and 3.

The drive train 10 comprises an electric motor 11, an interposed flywheel 12', a flexible coupler 13, a hydraulic pump 14, a mounting 15, a bracket 16, a cushioning pad 17 and a drive shaft 18.

The electric motor 11 is connected via the drive shaft 18 to the flexible coupler 13. The drive shaft 18 and the flexible coupler 13 are in a flanged connection. The flexible coupler 13 is connected to the hydraulic pump 14 via spline. On the drive shaft 18 between the electric motor 11 and the flexible coupler 13 the interposed flywheel 12' is mounted. The hydraulic pump 14 is connected to hydraulic actuators of the excavator, i.e. for example the hydraulic cylinders 50, 52, 54 of the boom 4.

The electric motor 11 is connected and fixed via the brackets 16 to the mounting 15 positioned below the electric motor 11 in an installation state of the drive train. Four cushioning pads 17 are provided at each corner of the mounting 15. Each one of the cushioning pads 17 is provided partly above and partly below the mounting 15, wherein an intermediate part of each one of the cushioning pads 17 penetrates trough a respective through hole of the mounting 15 such that the part of the cushioning pad 17 provided above the mounting 15 is connected to the part of the cushioning pad 17 provided below the mounting 15. The cushioning pads 17 comprise resilient material and thus reduce, i.e. compensate for, vibrations generated by the drive train 10.

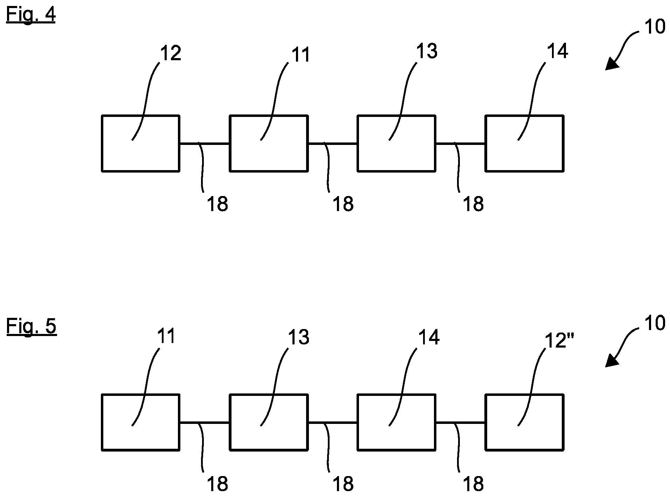

Figure 4 is a view schematically showing the drive train 10 according to a second embodiment.

The configuration of the drive train 10 according to the second embodiment is the same as the one of the drive train 10 according to the first embodiment. The active principle of the drive train 10 according to the second embodiment is the same as the one of the drive train 10 according to the first embodiment. However, relative arrangement of the single components forming the drive train 10 according to the second embodiment is different from the one of the drive train 10 according to the first embodiment. Thus, only differences between the two embodiments will be described below.

According to the second embodiment, the flywheel arrangement comprises an electric motor side flywheel 12 connected to the electric motor 11 on a side of the electric motor 11 which is opposite to the side of the electric motor 11 where the hydraulic pump 14 is provided.

Figure 5 is a view schematically showing the drive train 10 according to a third embodiment.

The configuration of the drive train 10 according to the third embodiment is the same as the one of the drive train 10 according to the first and second embodiments. The active principle of the drive train 10 according to the third embodiment is the same as the one of the drive train 10 according to the first and second embodiments. However, relative arrangement of the single components forming the drive train 10 according to the third embodiment is different from the one of the drive train 10 according to the first and second embodiments. Thus, only differences between the two embodiments will be described below.

According to the third embodiment, the flywheel arrangement comprises a hydraulic pump side flywheel 12" connected to the hydraulic pump 14 on a side of the hydraulic pump 14 which is opposite to a side of the hydraulic pump 14 where electric motor 11 is provided.

For the sake of completeness, also a combination of the embodiments described above is possible. That is, the flywheel arrangement may comprise the electric motor side flywheel 12, the interposed flywheel and/or the hydraulic pump side flywheel 12".

### Reference signs

- 1: excavator
- 2: platform
- 24: hinge portion
- 3: undercarriage
- 4: boom
- 40: operator's cab
- 6: dipper
- 7: bucket
- 8: engine compartment
- 10: drive train
- 11: electric motor
- 12, 12', 12": flywheel
- 13: flexible coupler
- 14: hydraulic pump
- 15: mounting
- 16: bracket
- 17: cushioning pad
- 18: drive shaft
- 50: first hydraulic cylinder
- 52: second hydraulic cylinder
- 54: third hydraulic cylinder

## Claims

1. Drive train (10) for an electric hydraulic construction machine (1), the drive train (10) comprising:
a drive system with an electric motor (11) comprising
a first output element protruding from the electric motor (11), and
a hydraulic pump (14) provided on a side of the electric motor (11) from which the first output element protrudes; and
a flywheel arrangement (12, 12', 12") connected to the system.

2. Drive train (10) according to claim 1, wherein the flywheel arrangement comprises an electric motor side flywheel (12) connected to the electric motor (11) on a side of the electric motor (11) which is opposite to the side of the electric motor (11) where the hydraulic pump (14) is provided.

3. Drive train (10) according to claim 1 or 2, wherein the flywheel arrangement comprises an interposed flywheel (12') provided between the electric motor (11) and the hydraulic pump (14).

4. Drive train (10) according to claim 3, wherein the first output element of the electric motor (11) is connected torsion-proof to the interposed flywheel (12').

5. Drive train (10) according to anyone of claims 1 to 4, wherein the flywheel arrangement comprises a hydraulic pump side flywheel (12") connected to the hydraulic pump (14) on a side of the hydraulic pump (14) which is opposite to a side of the hydraulic pump (14) where electric motor (11) is provided.

6. Drive train (10) according to anyone of claims 1 to 5, further comprising a flexible coupler (13) between the electric motor (11) and the hydraulic pump (14).

7. Drive train (10) according to claim 6, wherein the flexible coupler (13) is connected to the hydraulic pump (14) via spline.

8. Drive train (10) according to claim 6 or 7, wherein the flexible coupler (13) is a torsion-elastic coupling.

9. Drive train (10) according anyone of the preceding claims, wherein the flywheel arrangement (12, 12', 12") is configured to compensate for fluctuations in rotational speed of the drive train (10) based on inertia of the flywheel arrangement (12, 12', 12") in response to fluctuations in hydraulic pump load of the hydraulic pump (14).

10. Electric hydraulic construction machine (1) comprising:
the drive train (10) according to anyone of the preceding claims,
a hydraulic system (50, 52, 54) connected to the hydraulic pump (14), and
a controller connected to the electric motor (11),
wherein the controller is configured to control an operation of the electric motor (11) based on hydraulic load required by the hydraulic system (50, 52, 54).
